# EUROPÄISCHE PATENTSCHRIFT

(11) **EP 0 546 444 B1**
(45) Veröffentlichungstag und Bekanntmachung des Hinweises auf die Patenterteilung: **22.02.1995**
(21) Anmeldenummer: 92120611.6
(22) Anmeldetag: 03.12.1992
(51) Int. Cl.: B62D 65/00

(54) **Verfahren und Vorrichtung zum Einbau der vorderen Sitze in die Karosserie eines Automobils**
Method and device for installation of the front seats into the body of a car
Procédé et dispositif pour le montage des sièges avants dans la carrosserie d'un véhicule automobile

(30) Priorität: 09.12.1991 DE 4140521
(43) Veröffentlichungstag der Anmeldung: 16.06.1993
(73) Patentinhaber: Adam Opel Aktiengesellschaft, 65428 Rüsselsheim (DE); General Motors Espana, S.A., Figueruelas (Zaragoza) (ES)
(72) Erfinder: Müller, Hans-Dieter, Ing. (grad.), W-6096 Raunheim (DE); Thomas, Karl Heinz, W-6501 Wörrstadt (DE); Ast, Hubert, Dipl.-Ing., W-6085 Nauheim (DE); Magee, Conor, B.E.C., Eng., W-6200 Wiesbaden (DE)
(74) Vertreter: Bergerin, Ralf, Dipl.-Ing.

(56) Entgegenhaltungen:
- EP-A- 0 081 656
- EP-A- 0 410 833
- PATENT ABSTRACTS OF JAPAN vol. 8, no. 90 (M-292)(1527) 25. April 1984 & JP-A-59 006 181 (MITSUBISHI JIDOSHA KOGYO K.K.) 13. Januar 1984

## Beschreibung

Die Erfindung bezieht sich auf ein Verfahren und eine Vorrichtung zum Einbau der vorderen Sitze in die Karosserie eines Automobils, insbesondere eines Personenkraftwagens, bei welchem die seitlich der Montagelinie bereitgestellten Sitze mit Hilfe eines Manipulators durch die seitliche Türöffnung quer zur Montagelinie in das Fahrzeug transportiert und an der Einbauposition abgesenkt werden.

An Automobil-Montagelinien werden jeder Karosserie jeweils ein Satz Sitze in der erforderlichen technischen Ausstattung und in der gewünschten Farbausführung zugeordnet. Dabei ist es bisher üblich, den in der Sitzfertigung zusammengestellten Satz von Sitzen an der Montagelinie in der Art wieder zu vereinzeln, daß der rechte Vordersitz rechts neben der Karosserie und der linke Vordersitz links von der Karosserie abgestellt werden, um dann jeweils von Hand oder mechanisiert durch die Öffnungen der Seitentüren von den jeweiligen Seiten eingebaut zu werden.

Bei "Just in Time"-Zulieferung der Sitzgarnituren wird im allgemeinen ein Satz Sitze, bestehend aus dem rechten und dem linken Vordersitz, der hinteren Sitzfläche, den hinteren Rückenlehnen sowie den Kopfstützen, auf einer Palette angeliefert. Für die Montage wird diese Palette an einer Seite der Montagelinie mittels Förderer bereitgestellt, wobei rechtzeitig vorher ein Vordersitz, nämlich der für die andere Fahrzeugseite, auf die andere Seite der Montagelinie transportiert werden muß. Dies erfordert neben den erheblichen Aufwendungen für diesen gesonderten Transport durch Anordnung entsprechender Förderer für den von der Palette zu separierenden Sitz auch wertvolle zusätzliche Grundfläche neben der Montagelinie für den Einbau des Sitzes von der anderen Seite. Auch wenn die Sitze aus einer betriebseigenen Sitzfertigung getrennt der Montagelinie zugeführt werden, muß jeweils links und rechts neben der Montagelinie Raum für die Sitzmontage vorgesehen sein.

Durch die JP-A-059-6181 ist es bekannt, die seitlich neben der Montagelinie bereitgestellten Frontsitze eines Personenkraftwagens mit Hilfe eines Manipulators aufzunehmen, zumindest einen der Sitze über den Aufbau des Personenkraftwagens hinwegzufördern und die Sitze jeweils beidseits des Aufbaues durch die seitlichen Türöffnungen quer zur Montagelinie in das Fahrzeug zu transportieren und an der Einbauposition abzusenken.
Auch hier ist somit beidseits der Montagelinie eine erhebliche Fäche für die Manipulatoren und über der Montagelinie ausreichende Höhe für die Sitzförderung erforderlich.
Einem Einbau aller Sitze von einer Seite des Automobils her steht bisher allgemein entgegen, daß die auf die der Montageseite gegenüberliegenden Seite zu montierenden Sitze, insbesondere wenn diese eine hohe Lehne aufweisen, nicht über den Mitteltunnel der Karosserie bzw. über die am Mitteltunnel befindlichen Teile wie Schalthebel und Bremshebel gefördert werden können.

Der Einbau der vorderen Sitze ohne Manipulatoren ist eine körperliche schwere Arbeit, da die Sitze mit Sorgfalt in das Innere der Karosserie hineingehoben werden müssen, bevor sie an ihren Auflagern verschraubt werden können.

Um diese Nachteile zu vermeiden ist es Aufgabe der Erfindung, ein Verfahren aufzuzeigen, mit welchem alle Vordersitze eines Automobil von nur einer Seite der Montagelinie her einbaubar sind und ein Fördern der Sitze über den Aufbau des Automobils nicht erforderlich ist sowie eine Vorrichtung zu schaffen, mit welcher dieses Verfahren vorteilhaft ausführbar ist.

Zur Lösung dieser Aufgabe wird erfindungsgemäß vorgeschlagen, daß die vorderen Sitze an nur einer Seite der Montagelinie in einer Anordnung zueinander wie an ihrem späteren Einbauort aufgestellt werden, jeder der Sitze von einem Greifer von oben her gefaßt und gehalten wird, die Sitze mittels der Greifer angehoben werden auf eine Höhe, welche das Einfahren eines ersten Sitzes durch die seitliche Türöffnung des Automobil ermöglicht, die Sitze in das Innere des Automobil bewegt werden, bis der erste Sitz zu einem diese Bewegungsrichtung begrenzenden Bauteil (wie z. B. die Mittelkonsole) bewegt ist, danach dieser erste Sitz im Inneren des Automobils nach hinten oben bewegt wird, danach die Sitze gemeinsam weiter in das Innere des Automobil bewegt werden, bis ein eventuell weiterer Sitz an ein die Bewegungsrichtung begrenzendes Bauteil gelangt und auch dieser nach hinten oben bewegt wird und danach die Sitze gemeinsam weiter in das Innere des Automobils bewegt werden, bis sich der erste Sitz in Querrichtung des Automobils gesehen über seinem Einbauort befindet, danach der erste Sitz und eventuell weitere nach hinten oben bewegte Sitze in ihre Ausgangslage zurückbewegt werden, alle vorderen Sitze gemeinsam auf ihre Montageposition abgesetzt werden und die Greifer die Sitze freigeben.

Die nach hinten oben verlaufende Bewegung ist in vorteilhafter Weise eine parallele Schwenkbewegung um einen oberhalb des Sitzes befindlichen Punkt.

Die Erfindung wird vorrichtungsmäßig dadurch gelöst, daß an einem waagerecht quer zur Längsachse des Automobil ausgerichteten freien Arm eines Manipulators für jeden vorderen Sitz ein Greifer angeordnet ist, die Greifer derart ausgebildet sind, daß sie den jeweiligen Sitz von oben her greifen und halten können, der Arm mit dem Greifer in waagerechter Lage heb- und senkbar sowie zumindest in seiner Längsrichtung verschiebbar ist und der bzw. die zum freien Ende des Armes hin angeordneten Greifer jeweils mittels eines Lenkerparallelogramms am Arm angelenkt sind, welcher ein Verschwenken dieser Greifer nach hinten oben ermöglichen, wobei jedem Lenkerparallelogramm ein einzeln ansteuerbarer Motor für die Schwenkbewegung zugeordnet ist.

Die nach hinten oben verlaufende Bewegung kann anstelle des Lenkerparallelogramms auch durch eine Aufhängung der Greifer mittels Kurvenführungen oder mittels überlagerter gerader Bewegungen erzielt werden.

Der waagerechte Arm des Manipulators ist vorzugsweise an einem Ende mit einer senkrecht verlaufenden Tragkonstruktion verbunden, um welche der Arm in an sich bekannter Weise in einer waagerechten Ebene schwenkbar angeordnet ist.

Die Tragkonstruktion kann eine vom Boden aufsteigende Säule oder auch eine von der Decke herabreichende Halterung sein, wobei sich die Tragkonstruktion auf einer in waagerechter Ebene verschiebbaren Basis abstützt.

Die Greifer können gemäß der technischen Lehre nach der Patentanmeldung DE-A-4 131 900 ausgebildet sein.

In vorteilhafter Weise können die an dem Arm befindlichen Greifer in der Längsachse des Armes verschiebbar angeordnet sein und während des Greifens der Sitze einen anderen Abstand voneinander haben als während des Absetzens der Sitze im Inneren des Automobils und für das Absetzen in verschiedenen Automobilen mit unterschiedlichen Abstandsrasten, welche sich entsprechend dem Automobiltyp einstellen, ausgerüstet sein.

Ausführungsbeispiele der Erfindung sind nachstehend anhand von Zeichnungen näher beschrieben.

Es zeigen:
- Fig. 1 bis Fig. 8: die Verfahrensschritte zum Einbau der Vordersitze in einem Personenkraftwagen mit zwei vorderen Sitzen;
- Fig. 9: eine erfindungsgemäße Vorrichtung mit aufgenommenen und in das Innere eines Personenkraftwagens eingefahrenen Sitzen;
- Fig. 10: die Vorrichtung nach Fig. 9 aus Richtung A.

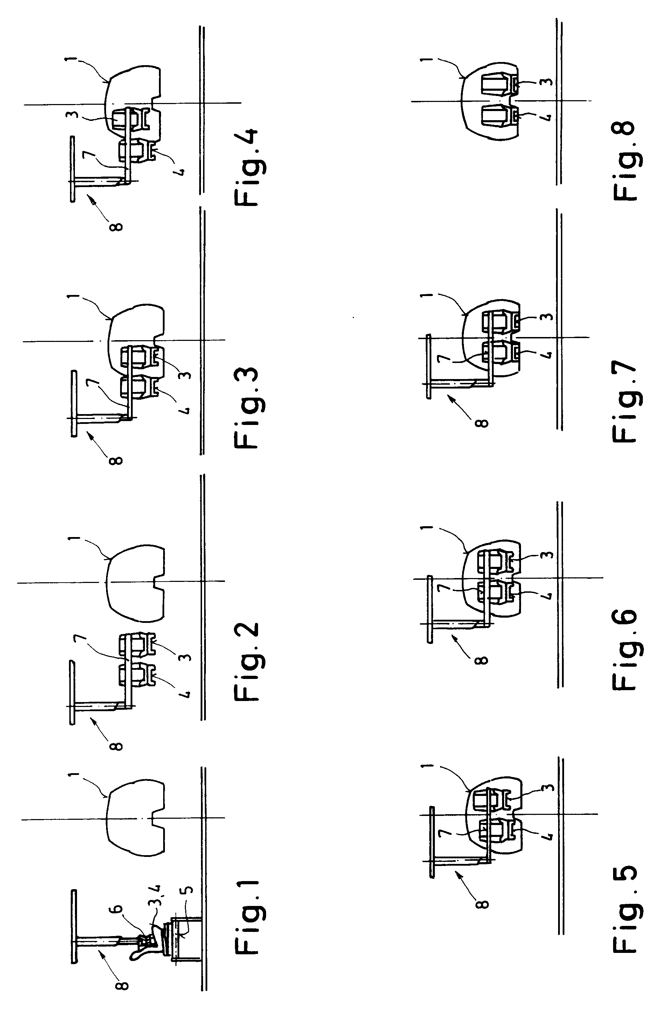

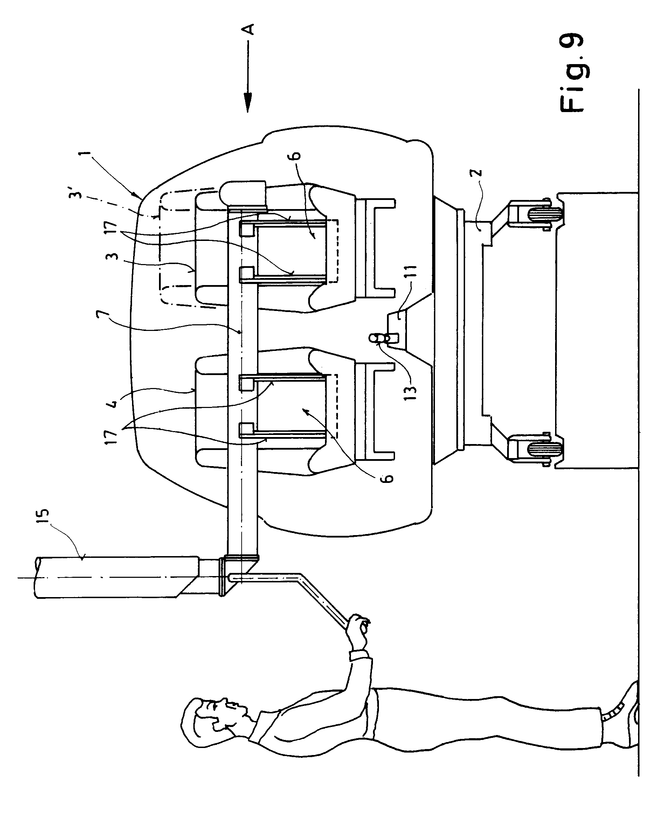

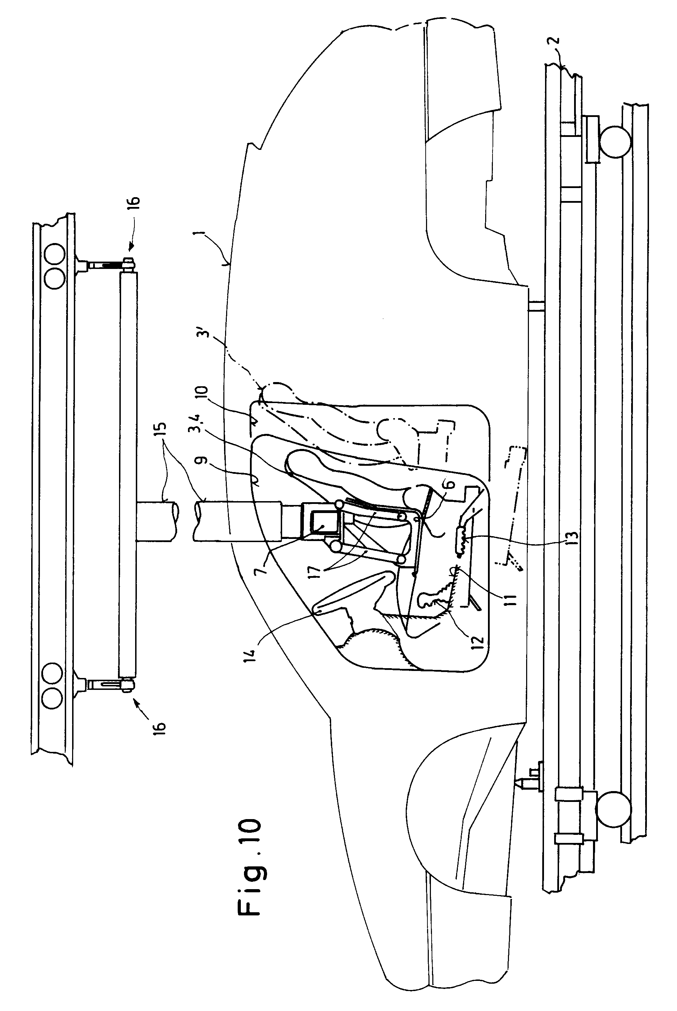

In den Figuren 1 bis 8 ist die Silhouette des Querschnittes eines Automobils 1, spezielle eines Personenkraftwagens, dargestellt, der senkrecht zur Bildebene auf Transporteinrichtungen 2 (siehe Fig. 9 und 10) einer Montagelinie bewegt wird.

Neben der Montagelinie sind die beiden vorderen Sitze 3 und 4 nebeneinander abgestellt, und zwar beide auf einer Seite der Montagelinie. Im dargestellten Beispiel zeigt Fig. 1, daß beide nebeneinander stehenden Sitze 3, 4 auf einer Rollenbahn 5 stehen, und zwar gegenüber der späteren Einbaurichtung um 90 Grad verdreht. Es ist jedoch auch jede andere Ablagestellung für die beiden nebeneinander stehenden Sitze 3, 4 möglich. Auch deren Abstand voneinander ist unwesentlich, da der richtige Einbauabstand während des Einbauverfahrens, z. B. während des Anhebens der Sitze 3, 4, herstellbar ist. Aus dieser Ablagestellung werden die Sitze 3, 4 von oben her, also von der Polsterseite her, mittels Greifern 6 aufgenommen, die sich an einem waagerechten Arm 7 einer Einbauvorrichtung 8 befinden, welche später noch detailliert beschrieben wird. Die Sitze 3, 4 werden von der Einbauvorrichtung 8 an dem Arm 7 angehoben und in eine Position geschwenkt, die parallel zu ihrer späteren Einbaulage neben der Karosserie des Automobils 1 gegenüber der vorderen Türöffnung 9, 10 ist (Fig. 2 und Fig. 10). Im nächsten Verfahrensschritt werden beide vorderen Sitze 3, 4 gemeinsam mittels der Einbauvorrichtung 8 zum Innenraum des Automobils 1 hin bewegt, bis der erste Sitz 3 in unmittelbarer Nähe solcher Bauteile gelangt, welche einem weiteren Bewegen des Sitzes 3 in den Innenraum hinein im Wege stehen (Fig. 3). Solche Bauteile können die Mittelkonsole 11 mit dem Schalthebel 12, der Handbremshebel 13 oder auch das Lenkrad 14 sein (Fig. 10). An dieser Stelle wird allein der Sitz 3 von dem Arm 7 weg im Innenraum des Automobils 1 nach hinten oben bewegt. Er gelangt damit in seitlicher Projektion gesehen über bzw. hinter die einer solchen Bewegung im Wege stehenden Bauteile (Fig. 4). Beide Sitze 3, 4 werden danach weiter in das Innere des Automobils 1 hineinbewegt, bis sowohl der Sitz 3 als auch der Sitz 4 in Querrichtung des Automobils 1 über ihren Einbaupositionen sind (Fig. 5). Jetzt wird der Sitz 3 wieder nach vorn unten auf das Niveau des Sitzes 4 gebracht (Fig. 6) und beide Sitze 3, 4 können gemeinsam auf ihre Einbauposition abgesenkt werden (Fig. 7). Die Greifer 6 lösen sich dann von den Sitzen 3, 4. Die Einbauvorrichtung 8 nimmt den Arm 7 aus dem Innenraum des Automobils 1 heraus. Die Sitze 3, 4 stehen somit am Montageort bereit, um mit der Karosserie des Automobils 1 verschraubt zu werden (Fig. 8). Mit 9 ist die Türöffnung eines viertürigen und mit 10 die größere Türöffnung eines zweitürigen Personenkraftwagens bezeichnet, wobei aus Fig. 10 ersichtlich ist, daß auch bei der größeren Türöffnung 10 eines zweitürigen Personenkraftwagens ein Durchschieben der Sitze von der einen zur anderen Seite ohne Anwendung des beschriebenen Verfahrens nicht möglich ist. Bei Anwendung des Verfahrens sind die Sitze 3, 4 jedoch von einer Seite eines Automobils 1 sowohl durch die relativ kleine Türöffnung 9 eines viertürigen Fahrzeuges als auch durch die größere Türöffnung 10 eines zweitürigen Fahrzeuges einbaubar.

Die erfindungsgemäße Vorrichtung besteht aus einer an sich für Montageeinrichtungen bekannten verschiebbar angebrachten Säule 15, welche einen waagerechten Arm 7 trägt der an der Säule 15 motorisch höhenverstellbar ist. Als Motorik sind z. B. eine Hydraulik, eine Pneumatik oder ein elektrischer Antrieb möglich. Die Länge des Armes 7 ist so bemessen, daß er das Automobil 1 in seiner Breite im Bereich der vorderen Sitze 3, 4 überdecken kann. Die Verschiebbarkeit der Säule 15 wird durch eine an sich bekannte Aufhängung an über Kreuz angeordneten Rollengehängen 16 erzielt. An dem Arm 7 sind mittels jeweils eines Lenkerparallelogramms 17 Greifer 6 angelenkt, und zwar für jeden einzubauenden Sitz 3, 4 ein Greifer 6. Das Lenkerparallelogramm 17 besteht vorzugsweise aus vier Lenkern, die einerseits an dem Arm 7 und andererseits an dem Greifer 6 scharnierartig angelenkt sind. Das Lenkerparallelogramm 17 kann aber auch von drei Lenkern gebildet werden. Die Greifer 6 bestehen aus einem L-förmigen Auflageteil und einer motorisch bewegbaren Zunge. Sie sind in der Lage, einen Sitz von der Polsterseite her positionsgenau aufzunehmen und wieder abzusetzen. Ein solcher Greifer ist in der DE-Patentanmeldung 41 31 900.1 beschrieben. Die Lenkerparallelogramme 17 sind so am Arm 7 und an den Greifern 6 angelenkt, daß die Greifer 6 jeweils eine Schwenkbewegung in einer Ebene senkrecht zur Längsachse des Armes 7 derart ausführen können, daß sich die Konturen des jeweiligen Greifers 6 und somit auch die des daran befindlichen Sitzes 3, 4 auf das Automobil 1 bezogen nach hinten oben verschieben. Die Lenkerparallelogramme 17 und die an ihnen befestigten Greifer 6 können im Längsverlauf des Armes 7 fix befestigt sein; sie können aber auch auf dem Arm 7 axial verschiebbar befestigt sein. Wenn mit der Vorrichtung nur ein bestimmter Automobiltyp montiert werden soll, dann kann es ausreichend sein, die Lenkerparallelogramme 17 auf der Längsachse des Armes 7 unverschiebbar festzulegen. Allerdings müssen dann die Sitze 3, 4 außerhalb des Automobils 1 bereits in dem Abstand aufgestellt sein, in dem sie später innerhalb des Automobils 1 montiert sind.

Im allgemeinen werden die Sitze 3, 4 eng beieinander stehend auf einer Palette angeliefert. Um sie von dieser Palette ohne Umsetzen mittels der Greifer 6 aufnehmen zu können, ist mindestens eines der Lenkerparallelogramme 17 auf dem Arm 7 längsverschiebbar angeordnet, um den vorgeschriebenen seitlichen Abstand der Sitze 3, 4 innerhalb des Automobils 1 herstellen zu können. Die Verschiebbarkeit der Lenkerparallelogramme 17 auf dem Arm 7 erfolgt in an sich bekannter Weise vermittels eines motorischen Antriebes und vorzugsweise gegen vorgegebene Anschläge. Von besonderem Vorteil ist die Verschiebbarkeit der Lenkerparallelogramme 17 auf dem Arm 7 dann, wenn unterschiedliche Automobile 1 auf der gleichen Montagelinie montiert werden.

Die Funktion der Vorrichtung ist wie folgt: Durch die allseitige Beweglichkeit der Säule 15 über der Bodenfläche kann der Bediener 18 die Greifer 6 sehr einfach über die an einer Seite der Montagelinie abgestellten vorderen Sitze 3, 4 bringen. Durch Absenken des Armes 7 an der Säule 15 legen sich die Anlageteile der Greifer 6 auf die Polster der Sitze 3, 4 auf und verbinden sich mit den Sitzen 3, 4. Die an der Säule 15 befindliche motorische Höhenverstellung ermöglicht es, den Arm 7 gemeinsam mit den Sitzen 3, 4 auf eine Höhe zu bewegen, welcher der Höhe der Türöffnung 9, 10 über Bodenfläche entspricht. Der Arm 7 ist dabei um die senkrechte Achse der Säule 15 so zu verschwenken, daß die Längsachse des Armes 7 quer zur Längsachse des Automobils 1 steht. In dieser Position wird der Arm 7 vorteilhafter Weise durch an sich bekannte Mittel gegen weiteres Verschwenken oder Heben und Senken verrastet. In einer zwischen der Führung der Säule 15 und den Aufnahmen des Kraftfahrzeuges 1 auf der Montagelinie vorgesehenen Position, welche durch Anschläge festgelegt ist, wird der Arm 7 mit den Sitzen 3, 4 in das Innere des Automobils 1 bewegt, und zwar bis zu einem Anschlag, welcher diese Bewegung unterbricht, bevor der erste Sitz 3 an Teile des Automobils 1, wie z. B. die Mittelkonsole 11 oder den Handbremshebel 13, anschlägt. Aus dieser Position können der Greifer 6 gemeinsam mit dem Sitz 3 vermittels des Lenkerparallelogramms 17 gegenüber dem Arm 7 geschwenkt werden, und zwar nach hinten oben in bezug auf das Automobil 1. Die Schwenkbewegung wird dabei von einem Motor vollzogen, der jedem Lenkerparallelogramm 17 zugeordnet ist. Der Sitz 3 nimmt nach der Schwenkbewegung die Stellung ein, wie sie strichpunktiert mit 3' in Fig. 10 dargestellt ist. Damit liegt jetzt der Sitz 3 in seitlicher Projektion außerhalb der eine weitere Bewegung störenden Teile; der Arm 7 kann weiter in das Innere des Automobils 1 geschoben werden und mit ihm die Sitze 3, 4. Dies erfolgt bis zu einem weiteren Anschlag, an dem sich die Sitze 3, 4 bereits über ihren Einbaupositionen befinden; allerdings ist der der Einbauseite abgewandte Sitz 3 noch nach hinten oben versetzt. Er kann jetzt aber durch Zurückschwenken des Lenkerparallelogramms 17 auf Ausgangsposition auf eine analoge Position wie die des Sitzes 4 gebracht werden. Durch Absenken des Armes 7 vermittels der motorischen Höhenverstellung an der Säule 15 senken sich die Sitze 3, 4 auf ihre Montageposition und werden dort abgesetzt. Jetzt können die Greifer 6 von den Sitzen 3, 4 gelöst werden, damit der Arm 7 die Greifer 6 von den Sitzen 3, 4 abheben kann. Arm 7 und Greifer 6 werden nach dem Abheben der Greifer 6 von den abgesetzten Sitzen 3, 4 aus dem Inneren des Automobils 1 herausgefahren, um erneut Sitze für das nächste zu fertigende Automobil aufzunehmen.

Die Vorrichtung eignet sich für die Montage von zwei oder auch mehreren vorderen Sitzen. Sie ist verwendbar für eine chaotische Montage unterschiedlicher Fahrzeuge, wobei sowohl Rechtslenker als auch Linkslenker von gleicher Seite mit Sitzen versehen werden können.

Die Vorrichtung kann ausschließlich von Hand bedient werden, sie ist jedoch auch für einen weitestgehenden automatischen Ablauf einer Sitzmontage geeignet.

## Patentansprüche

1. Verfahren zum Einbau der vorderen Sitze in die Karosserie eines Automobils, insbesondere eines Personenkraftwagens, bei welchem die seitlich der Montagelinie bereitgestellten Sitze mit Hilfe eines Manipulators durch die seitlichen Türöffnungen quer zur Montagelinie in das Fahrzeug transportiert und an der Einbauposition abgesenkt werden, dadurch gekennzeichnet, daß die vorderen Sitze (3, 4) an nur einer Seite der Montagelinie in einer Anordnung zueinander wie an ihrem späteren Einbauort aufgestellt werden, jeder der Sitze (3, 4) von einem Greifer (6) von oben her gefaßt und gehalten wird, die Sitze (3, 4) gemeinsam mittels der Greifer (6) angehoben werden auf eine Höhe, welche das Einfahren eines ersten Sitzes (3) durch die seitliche Türöffnung (9, 10) des Automobils (1) ermöglicht, die Sitze (3, 4) in das Innere des Automobils (1) bewegt werden, bis der erste Sitz (3) zu einem diese Bewegungsrichtung begrenzenden Bauteil (Mitteltunnel 11; Schalthebel 12; Handbremshebel 13; Lenkrad 14 oder dergleichen) bewegt ist, danach dieser erste Sitz (3) im Inneren des Automobils (1) nach hinten oben bewegt wird, danach die Sitze (3, 4) gemeinsam weiter in das Innere des Automobils (1) bewegt werden bis ein eventuell weiterer Sitz an ein die Bewegungsrichtung begrenzendes Bauteil gelangt und auch dieser nach hinten oben bewegt wird und danach die Sitze (3, 4) gemeinsam weiter in das Innere des Automobils (1) bewegt werden, bis sich der erste Sitz (3) in Querrichtung des Automobils (1) gesehen über seinem Einbauort befindet, danach der erste Sitz (3) und eventuell weitere nach hinten oben bewegte Sitze in ihrer Ausgangslage zurückbewegt werden, alle vorderen Sitze (3, 4) gemeinsam auf ihre Montageposition abgesetzt werden und die Greifer (6) die Sitze (3, 4) freigeben.

2. Verfahren nach Anspruch 1, dadurch gekennzeichnet, daß die nach hinten oben erfolgende Bewegung eine parallele Schwenkbewegung um einen oberhalb des Sitzes (3) befindlichen Punkt ist.

3. Vorrichtung zum Einbau der vorderen Sitze eines Automobils, insbesondere eines Personenkraftwagens, bei welchem die seitlich der Montagelinie bereitgestellten Sitze mit Hilfe eines Manipulators durch die seitlichen Türöffnungen quer zur Montagelinie in das Fahrzeug transportiert und an der Einbauposition abgesenkt werden, dadurch gekennzeichnet, daß an einem waagerecht quer zur Längsachse eines mit Sitzen (3, 4) auszurüstenden Automobils (1) ausgerichteten freien Arm (7) eines Manipulators für jeden vorderen Sitz (3, 4) ein Greifer (6) angeordnet ist, die Greifer (6) derart ausgebildet sind, daß sie den jeweiligen Sitz (3, 4) von oben her greifen und halten können, der Arm (7) mit den Greifern (6) in waagerechter Lage heb- und senkbar sowie zumindest in seiner Längsrichtung verschiebbar ist und der bzw. die zum freien Ende des Armes (7) hin angeordneten Greifer (6) jeweils mittels eines Lenkerparallelogramms (17) am Arm (7) angelenkt sind, welcher ein Verschwenken dieser Greifer (6) nach hinten oben ermöglichen, wobei jedem Lenkerparallelogramm (17) ein einzeln ansteuerbarer Motor für die Schwenkbewegung zugeordnet ist.

4. Vorrichtung nach Anspruch 3, dadurch gekennzeichnet, daß die nach hinten oben verlaufende Bewegung des Greifers (6) gegenüber dem Arm (7) anstelle vermittels eines Lenkerparallelogramms (17) mittels einer Kurvenführung erfolgt.

5. Vorrichtung nach Anspruch 3, dadurch gekennzeichnet, daß die nach hinten oben verlaufende Bewegung des Greifers (6) gegenüber dem Arm (7) anstelle vermittels eines Lenkerparallelogramms (17) mittels überlagerter gerader Bewegungen in Längsführungen erfolgt.

6. Vorrichtung nach Anspruch 3 bis 5, dadurch gekennzeichnet, daß der Arm (7) an einem Ende mit einer senkrecht verlaufenden Tragkonstruktion (Säule 15) in einer waagerechten Ebene schwenkbar verbunden ist.

7. Vorrichtung nach Anspruch 3 bis 6, dadurch gekennzeichnet, daß die Tragekonstruktion eine vom Boden aufsteigenden Säule ist, die sich auf einer in waagerechter Ebene verschiebbaren Basis abstützt.

8. Vorrichtung nach Anspruch 3 bis 6, dadurch gekennzeichnet, daß die Tragekonstruktion eine von der Decke her herabreichende Halterung (Säule 15) ist, die sich auf einer in waagerechter Ebene verschiebbaren Basis an der Decke abstützt.

9. Vorrichtung nach Anspruch 3 bis 8, dadurch gekennzeichnet, daß die Greifer (6) gemäß der technischen Lehre nach Patentanmeldung P 41 31 900.1 ausgebildet sind.

10. Vorrichtung nach Anspruch 3 bis 9, dadurch gekennzeichnet, daß die an dem Arm (7) befindlichen Greifer (6) in der Längsachse des Armes (7) verschiebbar angeordnet sind und während des Greifens der Sitze (3, 4) einen anderen Abstand voneinander einnehmen als während des Absetzens der Sitze (3, 4) im Inneren des Automobils (1).

11. Vorrichtung nach Anspruch 3 bis 10, dadurch gekennzeichnet, daß der Abstand der Greifer (6) auf der Längsachse des Armes (7) mit unterschiedlichen auf verschiedene Automobiltypen ausgelegten Abstandsrasten festlegbar ist.

## Claims

1. Method for installing the front seats in the body of a motor vehicle, especially a car, in which the seats, which have been placed on one side of the assembly line, are transported with the aid of a manipulator through the side door openings transversely to the assembly line and lowered into the installation position, **characterised** in that the front seats (3, 4) are installed on only one side of the assembly line in an arrangement to one another as in their place of installation later, each of the seats (3, 4) is gripped by a gripper (6) from above and retained, the seats (3, 4) are raised together by means of the gripper (6) to a height which allows the introduction of a first seat (3) through the side door opening (9, 10) of the car (1), the seats (3, 4) are moved into the interior of the car (1) until the first seat (3) is moved to a part delimiting this movement direction (centre tunnel 11; gear lever 12; handbrake lever 13; steering wheel 14 or the like), after which this first seat (3) inside this car (1) is moved back upwards, after which the seats (3, 4) are moved together further into the interior of the car (1) until possibly a further seat reaches a part delimiting the movement direction and this too is moved back upwards and after this the seats (3, 4) are together moved further into the interior of the car (1) until the first seat (3) is located above its installtion place, when viewed in the transverse direction of the car (1), after which the first seat (3) and possibly further seats moved back upwards are moved back into their starting positions, all the front seats (3, 4) are together deposited into their installation positions and the seats (3, 4) are released by the grippers (6).

2. Method according to claim 1, **characterised** in that the back upwards movement is a parallel pivot movement which takes place about a point situated above the seat (3).

3. Device for installation of the front seat of a motor vehicle, especially a car, in which the seats, which have been placed on one side of the assembly line, are transported with the aid of a manipulator through the side door openings transversely to the assembly line and lowered into the installation position, **characterised** in that on a free arm (7) of a manipulator aligned with a car (1) fitted with seats (3, 4) horizontally transverse to the longitudinal axis a gripper (6) is arranged for each forward seat (3, 4), the grippers (6) are constructed in such a way that they grip and retain the respective seat (3, 4) from above, the arm (7) with the grippers (6) can be raised and lowered in the horizontal position and is displaceable at least in its longitudinal direction and the gripper or grippers (6) arranged towards the free end of the arm (7) are linked by a steering parallelogram (17) in each case to the arm (7) which allows these grippers (6) to pivot back upwards, wherein each steering parallelogram (17) is provided with a separately controlled motor for the pivot movement.

4. Device according to claim 3, **characterised** in that the back upward movement of the gripper (6) relative to the arm (7), instead of by means of the steering parallelogram (17), is achieved by following a curve.

5. Device according to claim 3, **characterised** in that the back upward movement of the gripper (6) relative the arm (7), instead of a steering parallelogram (17), is achieved by means of superimposed straight movements in longitudinal guides.

6. Device according to claim 3 to 5, **characterised** in that the arm (7) is pivotally connected in a horizontal plane at one end with a vertically extending support structure (column 15).

7. Device according to claim 3 to 6, **characterised** in that the support structure is a column rising up from the base which is supported on a base which is displaceable in a horizontal plane.

8. Device according to claim 3 to 6, **characterised** in that the support structure is a holding means (column 15), reaching down from the ceiling, which is supported by the ceiling on a base which is displaceable in a horizontal plane.

9. Device according to claim 3 to 8, **characterised** in that the grippers (6) are constructed according to the technical teaching of patent application P 41 31 900.1.

10. Device according to claim 3 to 9, **characterised** in that the grippers (6) situated on the arm (7) are displaceable on the longitudinal axis of the arm (7) and during gripping are at a different distance from one another than when depositing the seats (3, 4) in the interior of the car (1).

11. Device according to claim 3 to 10, **characterised** in that the distance of the grippers (6) on the longitudinal axis of the arm (7) can be fixed with different spacers for different types of cars.

## Revendications

1. Procédé pour le montage des sièges avant dans la carrosserie d'un véhicule automobile, en particulier d'une voiture automobile de tourisme, les sièges posés latéralement à côté de la ligne de montage étant, à l'aide d'un manipulateur, transportés à travers les ouvertures des portes latérales transversalement à la ligne de montage dans le véhicule et abaissées à la position de montage, caractérisé par le fait que les sièges avant (3, 4) sont posés sur un seul côté de la ligne de montage dans le même agencement réciproque qu'à leur emplacement de montage ultérieur, chacun des sièges (3, 4) est saisi depuis le haut et maintenu par un élément de préhension (6), les sièges (3, 4) sont soulevés conjointement au moyen des éléments de préhension (6) à une hauteur qui permet l'introduction d'un premier siège (3) par l'ouverture de porte latérale (9, 10) du véhicule automobile (1), les sièges (3, 4) sont déplacés à l'intérieur du véhicule automobile (1) jusqu'à ce que le premier siège (3) atteigne un élément (tunnel central 11, levier de changement de vitesse 12; levier de frein à main 13; volant 14 ou analogue) limitant le mouvement dans cette direction, après quoi ce premier siège (1) est déplacé à l'intérieur du véhicule automobile (1) vers l'arrière et le haut, les sièges (3, 4) sont ensuite déplacés en commun plus profondément dans l'intérieur du véhicule (1) jusqu'à ce qu'un éventuel siège supplémentaire atteigne un élément limitant le mouvement dans cette direction et ce siège est également déplacé vers l'arrière et le haut, et les sièges (3, 4) sont ensuite déplacés conjointement plus profondément dans l'espace intérieur du véhicule (1) jusqu'à ce que le premier siège (3), vu en direction transversale du véhicule automobile (1), se trouve au-dessus de son emplacement de montage, le premier siège (3) et d'éventuels autres sièges déplacés vers l'arrière et le haut sont ramenés ensuite à leur position de départ, tous les sièges avant (3, 4) sont déposés conjointement à leurs positions de montage et les éléments de préhension (6) libèrent les sièges (3, 4).

2. Procédé suivant la revendication 1, caractérisé par le fait que le mouvement vers l'arrière et le haut est un mouvement de pivotement parallèle autour d'un axe se trouvant au-dessus du siège (3).

3. Dispositif pour le montage des sièges avant d'un véhicule automobile, en particulier d'une voiture automobile, les sièges posés latéralement à côté de la ligne de montage étant, au moyen d'un manipulateur, transportés à travers les ouvertures de portes latérales transversalement à la ligne de montage et abaissés à la position de montage, caractérisé par le fait qu'un élément de préhension (6) est disposé sur un bras libre (7) d'un manipulateur, orienté horizontalement, transversalement à l'axe longitudinal d'un véhicule automobile (1) devant être équipé de sièges (3, 4), pour chacun des sièges avant (3, 4), les éléments de préhension (6) sont réalisés de manière à pouvoir saisir depuis le haut et maintenir le siège respectif (3, 4), le bras (7) avec les éléments de préhension (6) en position horizontale est déplaçable en translation vers le haut et vers le bas et en translation au moins suivant sa direction longitudinale, et le ou les élément(s) de préhension (6) disposé(s) vers l'extrémité libre du bras (7), est ou sont articulé(s) chacun au moyen d'un parallélogramme articulé (17) sur le bras qui permet un pivotement de ces éléments de préhension (6) vers l'arrière et le haut, un moteur à commande individuelle étant associé à chaque parallélogramme articulé (17) pour le mouvement de pivotement.

4. Dispositif suivant la revendication 3, caractérisé par le fait que le mouvement de l'élément de préhension (6) vers l'arrière et le haut par rapport au bras (7) s'effectue, non pas à l'aide d'un parallélogramme articulé (17), mais au moyen d'un guidage curviligne.

5. Dispositif suivant la revendication 3, caractérisé par le fait que le mouvement de l'élément de préhension (6) vers le haut et l'arrière par rapport au bras (7) s'effectue, non pas au moyen d'un parallélogramme articulé (17), mais par des mouvements rectilignes superposés dans des guides longitudinaux.

6. Dispositif suivant la revendication 3 à 5, caractérisé par le fait que le bras (7) est relié de manière à pouvoir pivoter dans un plan horizontal à une extrémité à une structure de support (colonne 15) s'étendant verticalement.

7. Dispositif suivant la revendication 3 à 6, caractérisé par le fait que la structure de support est constituée par une colonne montant depuis le sol et s'appuyant sur une base déplaçable en translation dans le plan horizontal.

8. Dispositif suivant la revendication 3 à 6, caractérisé par le fait que la structure de support est constituée par un support (colonne 15) s'étendant vers le bas depuis le plafond et s'appuyant sur le plafond sur une base déplaçable en translation dans le plan horizontal.

9. Dispositif suivant la revendication 3 à 8, caractérisé par le fait que les éléments de préhension (6) sont réalisés suivant l'enseignement technique de la demande de brevet DE-41 31 900.1.

10. Dispositif suivant la revendication 3 à 9, caractérisé par le fait que les éléments de préhension (6) se trouvant sur le bras (7) sont déplaçables en translation suivant l'axe longitudinal du bras (7) et occupent, pendant la préhension des sièges (3, 4), une distance réciproque différente de celle qu'ils occupent pendant la dépose des sièges (3, 4) dans l'espace intérieur du véhicule automobile (1).

11. Dispositif suivant la revendication 3 à 10, caractérisé par le fait que la distance réciproque des éléments de préhension (6) suivant l'axe longitudinal du bras (7) peut être déterminée avec des butées de distance différentes correspondant à des types différents de véhicules automobiles.
